# EUROPEAN PATENT APPLICATION

(11) **EP 3 343 400 A1**
(43) Date of publication of application: **04.07.2018**
(21) Application number: 17161223.7
(22) Date of filing: 15.03.2017
(51) Int. Cl.: G06F 17/30

(54) **SYSTEM AND METHOD FOR DYNAMICALLY CREATING A DOMAIN ONTOLOGY**

(30) Priority: 29.12.2016 IN 201641044916
(71) Applicant: Wipro Limited, 560 035 Karnataka (IN)
(72) Inventor: HOSABETTU, Raghavendra, 560085 Bangalore (IN)
(74) Representative: Finnegan Europe LLP

(57) **Abstract**

This disclosure relates to system and method for dynamically creating a domain ontology. In one embodiment, the method comprises extracting a plurality of keywords from each of a plurality of syntactically valid sentences in an input document, determining a plurality of concepts from the plurality of keywords, determining a plurality of attributes for each of the plurality of concepts, and dynamically creating a domain ontology for at least one of the plurality of concepts based on the corresponding plurality of attributes. Each of the plurality of attributes comprises at least one of a property associated with a concept, a usage of a concept, a condition for a concept, a context associated with a concept, and a relationship among a set of concepts.

## Description

### Technical Field

This disclosure relates generally to artificial intelligence, and more particularly to the field of artificial intelligence known as natural language processing. Aspects of the disclosure relate to a system and method for dynamically creating a domain ontology based upon a natural language document, such that a computer may automatically extract the meaning conveyed by the natural language.

### Background

In an increasingly interconnected and evolving world, there are a number of interest areas (e.g., bioinformatics) that involve an intersection of different disciplines or domains (e.g., biology, computer science, and mathematics). Additionally, many industries develop products catering to the needs of different domains (e.g., pharmaceuticals, aerospace, etc.). People are thus required to work across different industries and/or on multiple domains, which require developing cross domain skills. Typically, people need to read and analyze multi-domain documents for various inferences. These inferences include, but are not limited to, finding key concepts, concept mapping to domain, and finding relationships between concepts within and across domains.

One area of research in artificial intelligence involves the use of computers to read natural language documents, and thereby extract and organize the concepts contained within the natural language. This process may be referred to as ontology creation. For example, current automatic ontology creation techniques employ concept identification based on pre-defined concepts and/or relationships among concepts for a given domain which are manually provided by domain experts. Additionally, automatic ontology creation techniques employ linguistic rule-based relationship finding which employs text clustering and classification to identify words that may be similar in usage and context. Further, the techniques rank and order identified words with thresholding for selecting lexical rules. A semantic model may then be built. Additionally, the semantic model may be compared with manually created ontology for validation. However, as will be appreciated, these techniques are not flexible to work across domains as they are built using pre-defined concepts as inputs.

### SUMMARY

In one embodiment, a method for dynamically creating a domain ontology is disclosed. In one example, the method comprises extracting a plurality of keywords from each of a plurality of syntactically valid sentences in an input document. The method further comprises determining a plurality of concepts from the plurality of keywords. The method further comprises determining a plurality of attributes for each of the plurality of concepts. Each of the plurality of attributes comprises at least one of a property associated with a concept, a usage of a concept, a condition for a concept, a context associated with a concept, and a relationship among a set of concepts. The method further comprises dynamically creating a domain ontology for at least one of the plurality of concepts based on the corresponding plurality of attributes. Each of the steps of the method may be performed by a domain ontology creation (DOC) engine.

In one embodiment, a system for dynamically creating a domain ontology is disclosed. In one example, the system comprises at least one processor and a memory communicatively coupled to the at least one processor. The memory stores processor-executable instructions, which, on execution, cause the processor to extract a plurality of keywords from each of a plurality of syntactically valid sentences in an input document. The processor-executable instructions, on execution, further cause the processor to determine a plurality of concepts from the plurality of keywords. The processor-executable instructions, on execution, further cause the processor to determine a plurality of attributes for each of the plurality of concepts. Each of the plurality of attributes comprises at least one of a property associated with a concept, a usage of a concept, a condition for a concept, a context associated with a concept, and a relationship among a set of concepts. The processor-executable instructions, on execution, further cause the processor to dynamically create a domain ontology for at least one of the plurality of concepts based on the corresponding plurality of attributes.

In one embodiment, a non-transitory computer-readable medium storing computer-executable instructions for dynamically creating a domain ontology is disclosed. In one example, the stored instructions, when executed by a processor, cause the processor to perform operations comprising extracting a plurality of keywords from each of a plurality of syntactically valid sentences in an input document. The operations further comprise determining a plurality of concepts from the plurality of keywords. The operations further comprise determining a plurality of attributes for each of the plurality of concepts. Each of the plurality of attributes comprises at least one of a property associated with a concept, a usage of a concept, a condition for a concept, a context associated with a concept, and a relationship among a set of concepts. The operations further comprise dynamically creating a domain ontology for at least one of the plurality of concepts based on the corresponding plurality of attributes.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for dynamically creating a domain ontology in accordance with some embodiments of the present disclosure.
**FIG. 2** is a functional block diagram of a domain ontology creation engine in accordance with some embodiments of the present disclosure.
**FIG. 3** is a flow diagram of an exemplary process for dynamically creating a domain ontology in accordance with some embodiments of the present disclosure.
**FIG. 4** is a flow diagram of a detailed exemplary process for dynamically creating a domain ontology in accordance with some embodiments of the present disclosure.
**FIG. 5** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

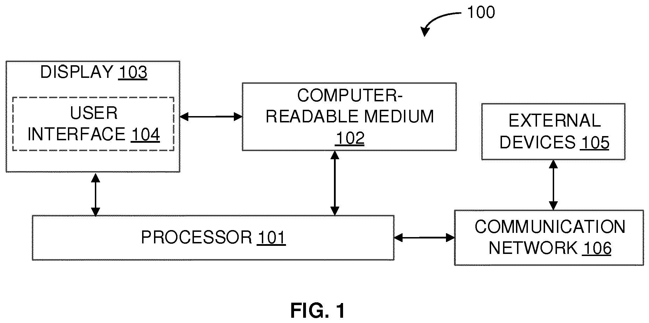

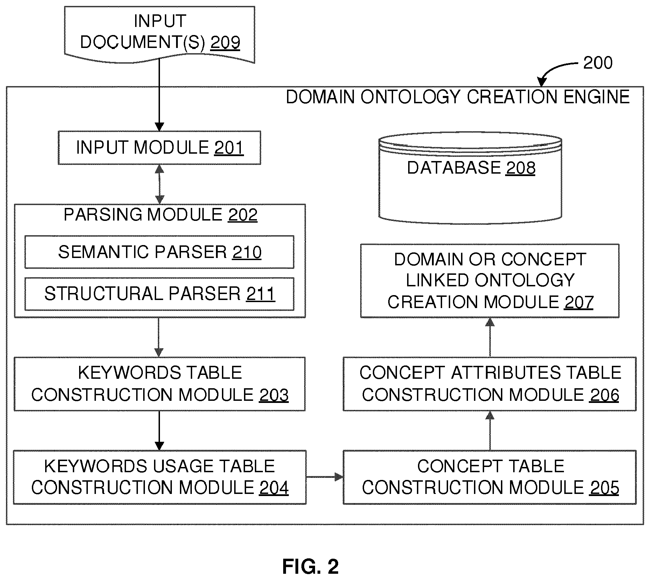

Referring now to FIG. 1, an exemplary system 100 for dynamically creating a domain ontology is illustrated in accordance with some embodiments of the present disclosure. In particular, the system 100 (e.g., laptop, netbook, or any other computing device) implements a domain ontology creation (DOC) engine for dynamically creating domain ontology. As will be described in greater detail in conjunction with FIG. 2, the DOC engine comprises multiple modules configured to process input documents so as to dynamically create domain ontology. The DOC engine extracts a plurality of keywords from each of a plurality of syntactically valid sentences in an input document, determines a plurality of concepts from the plurality of keywords, determines a plurality of attributes for each of the plurality of concepts, and dynamically creates a domain ontology for at least one of the plurality of concepts based on the corresponding plurality of attributes.

The system 100 comprises one or more processors 101, a computer-readable medium (e.g., a memory) 102, and a display 103. The computer-readable storage medium 102 stores instructions that, when executed by the one or more processors 101, cause the one or more processors 101 to dynamically create a domain ontology in accordance with aspects of the present disclosure. The computer-readable storage medium 102 may also store various data (e.g., input documents, grammatical rules, structural rules, extracted keywords, keywords table, keywords usage table, concept table, concept attributes table, domain ontology, etc.) that may be captured, processed, and/or required by the system 100. The system 100 interacts with a user via a user interface 104 accessible via the display 103. The system 100 may also interact with one or more external devices 105 over a communication network 106 for sending or receiving various data. The external devices 105 may include, but are not limited to, a remote server, a digital device, or another computing system.

Referring now to FIG. 2, a functional block diagram of the DOC engine 200 implemented by the system 100 of FIG. 1 is illustrated in accordance with some embodiments of the present disclosure. The DOC engine 200 may include various modules that perform various functions so as to dynamically create a domain ontology. In some embodiments, the DOC engine 200 comprises an input module 201, a parsing module 202, a keywords table construction module 203, a keywords usage table construction module 204, a concept table construction module 205, a concept attributes table construction module 206, a domain or concept linked ontology creation module 207, and a database 208.

The input module 201 receives input documents 209 from a user via the user interface, an application (e.g., Adobe Acrobat, BOTs, MS Word, Internet Explorer, etc.), or another device (e.g., scanner, fax machine, computing device, etc.). As will be appreciated by those skilled in the art, the input documents 209 may be text documents or web pages from which the data may be extracted so as to create a domain ontology based on underlying contexts in accordance with aspects of the present disclosure. In some embodiments, the input module 201 may receive domain specific input documents so as to create a domain ontology. In some embodiments, the input module 201 may also receive user inputs via the user interface. For example, the input module 201 may enable the user to perform manual correction of one or more sentences that are determined to be syntactically incorrect.

The parsing module 202 parses the input documents 209, extracts a plurality of sentences from the input documents 209, simplifies the plurality of sentences, and performs syntactic validation of each of the plurality of simplified sentences. In some embodiments, the parsing module 202 comprises a semantic parser 210 and a structural parser 211. The semantic parser 210 parses each of the sentences to check for its grammatical correctness. If a sentence does not satisfy a set of pre-defined grammatical rules, the semantic parser 210 provides for its correction and validation. For example, the semantic parser 210 may prompt the user, via the user interface, to manually correct the sentence according to the grammatical rules. Alternatively, the semantic parser 210 may automatically correct the sentence in accordance with the set of pre-defined grammatical rules, and may then prompt the user to validate the correction performed. Similarly, the structural parser 211 parses each of the sentences to check for its structural correctness. If a sentence does not satisfy a set of pre-defined structural rules, the structural parser 210 provides for its correction. For example, the structural parser 210 may prompt the user to manually correct the sentence according to the structural rules. Alternatively, the structural parser 210 may automatically correct the sentence in accordance with the set of pre-defined structural rules, and may then prompt the user to validate the correction performed. Thus, the output of the parsing module 202 is a plurality of syntactically valid simple sentences.

The keywords table construction module 203 extracts a plurality of keywords from the plurality of syntactically valid simple sentences, and constructs a keywords table. The keywords may be various parts of speech (PoS) of the syntactically valid simple sentences. For example, in some embodiments, the keywords may be nouns, noun phrases, verbs, verb phrases, prepositions, and prepositional phrases. It should be noted that, in some embodiments, the keywords table may be a noun term table comprising only nouns and noun phrases. Additionally, in some embodiments, each of the keywords may be associated with a unique identification in the table.

The keywords usage table construction module 204 constructs a keywords usage table from the keywords table for the identifications of keywords possessing the same or similar meaning. Thus, the keywords usage table has multiple sets of keywords such that each set has keywords possessing the same or similar meaning from the keywords table. Additionally, the keywords usage table has a feature or a property set for each of the multiple sets of keywords to indicate a context in which the keywords are used. In other words, the keywords usage table is a collection of synonymous set of keywords with corresponding feature or property set. It should be noted that, in some embodiments, the keywords usage table may be a noun term usage table if the keywords table (from which it is derived) includes only nouns and noun phrases.

The concept table construction module 205 constructs a concept table from the keywords usage table. In some embodiments, the concept table is a statistically significant concept table based on a statistical analysis for each of the plurality of synonymous set of keywords with respect to the input document. For example, in some embodiments, the statistically significant concept table is a statistically indexed term frequency - inverse document frequency (TF-IDF) concept table based on a frequency of occurrence of each of the plurality of synonymous set of keywords across the input document.

The concept attributes table construction module 206 constructs an attributes table for each of the concept in the concept table by parsing the sentences associated with that concept. The attributes may include, but are not limited to, a property associated with a concept, a usage of a concept, a condition for a concept, a context associated with a concept, and a relationship among a plurality of concepts. Thus, the attribute table has a list of concepts from the concept table along with the properties and relationship of each concept, and may also be known as a concept property and relationship table. In some embodiments, the properties of a concept (e.g., noun, noun phrase) may be identified part of speech (e.g., verb, verb phrase, etc.) or features (e.g., date, digit, unit, formula, etc.). Similarly, the relationship of a concept (e.g., noun, noun phrase) may be derived from identified part of speech (e.g., preposition, prepositional phrase, etc.).

The domain or concept linked ontology creation module 207 dynamically creates a domain or concept linked ontology based on the concept attributes table. In some embodiments, the domain ontology creation module 207 identifies at least one concept as a domain, based on the relationship among the at least one concept and some of the other concepts. Additionally, in some embodiments, the domain ontology creation module 207 creates a domain ontology by creating a concept structure for a domain (i.e., the identified concept) by querying the concept attributes table for that domain.

The database 208 store various data and tables created or required by each of the modules 201 - 207. For example, the database 208 may store input documents, grammatical rules, structural rules, extracted keywords, keywords table, keywords usage table, concept table, concept attributes table, domain ontology, and so forth.

As will be appreciated by those skilled in the art, all such aforementioned modules and submodules may be represented as a single module or a combination of different modules. Further, as will be appreciated by those skilled in the art, each of the modules may reside, in whole or in parts, on one device or multiple devices in communication with each other.

Further, as will be appreciated by one skilled in the art, a variety of processes may be employed for dynamically creating a domain ontology. For example, the exemplary system 100 may create the domain ontology by the processes discussed herein. In particular, as will be appreciated by those of ordinary skill in the art, control logic and/or automated routines for performing the techniques and steps described herein may be implemented by the system 100, either by hardware, software, or combinations of hardware and software. For example, suitable code may be accessed and executed by the one or more processors on the system 100 to perform some or all of the techniques described herein. Similarly application specific integrated circuits (ASICs) configured to perform some or all of the processes described herein may be included in the one or more processors on the system 100.

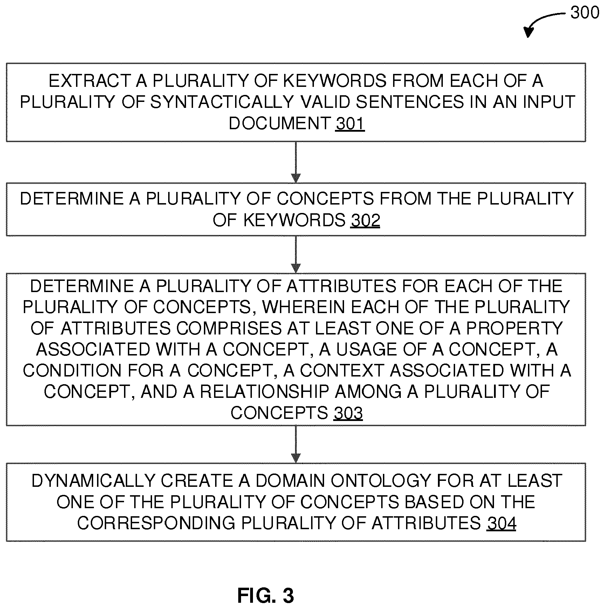

For example, referring now to FIG. 3, exemplary control logic 300 for dynamically creating a domain ontology via a system, such as system 100, is depicted via a flowchart in accordance with some embodiments of the present disclosure. As illustrated in the flowchart, the control logic 300 includes the steps of extracting a plurality of keywords from each of a plurality of syntactically valid sentences in an input document at step 301, determining a plurality of concepts from the plurality of keywords at step 302, determining a plurality of attributes for each of the plurality of concepts at step 303, and dynamically creating a domain ontology for at least one of the plurality of concepts based on the corresponding plurality of attributes at step 304. It should be noted that each of the plurality of attributes comprises at least one of a property associated with a concept, a usage of a concept, a condition for a concept, a context associated with a concept, and a relationship among a set of concepts.

In some embodiments, each of the plurality of keywords comprises at least one of a noun, a noun phrase, a verb, a verb phrase, a preposition, and a prepositional phrase. Further, in some embodiments, the plurality of syntactically valid sentences is derived by parsing the input document to extract a plurality of sentences, validating each of the plurality of sentences based on a set of pre-defined rules for at least one of a grammatical correctness and a structural correctness, and subjecting each of the plurality of sentences to a manual correction based on validation.

Additionally, in some embodiments, the plurality of concepts is determined by identifying a plurality of synonymous set of keywords from the plurality of keywords, performing a statistical analysis for each of the plurality of synonymous set of keywords with respect to the input document, and identifying the plurality of concepts based on the statistical analysis. In some embodiments, the statistical analysis comprises determining a frequency of occurrence of each of the plurality of synonymous set of keywords across the input document, and the plurality of concepts is identified based on a pre-defined threshold for the frequency of occurrence. In some embodiments, the control logic 300 further includes the step of determining one or more features for each of the plurality of synonymous set of keywords. It should be noted that the one or more features indicate a context each of the plurality of synonymous set of keywords.

Further, in some embodiments, the control logic 300 further includes the step of identifying, based on the relationship among at least some of the plurality of concepts, the at least one of the plurality of concepts as a domain. Further, in some embodiments, dynamically creating the domain ontology comprises creating a concept structure for the at least one of the plurality of concepts based on the corresponding plurality of attributes.

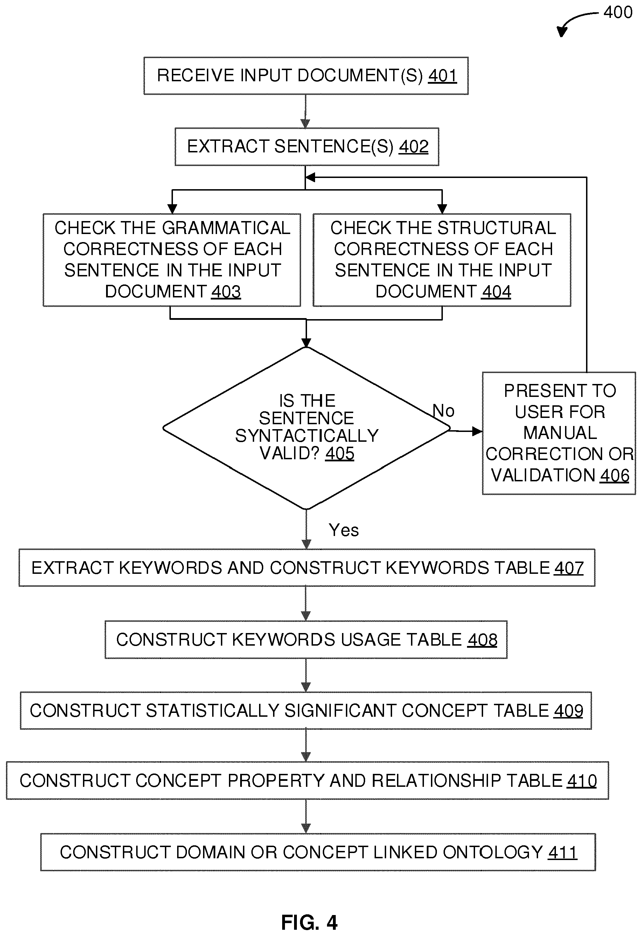

Referring now to FIG. 4, exemplary control logic 400 for dynamically creating a domain ontology is depicted in greater detail via a flowchart in accordance with some embodiments of the present disclosure. As illustrated in the flowchart, the control logic 400 includes the step of receiving input documents for ontology creation at step 401. The control logic 400 further includes the step of parsing the input documents so as to extract a plurality of sentences from the input documents at step 402. In some embodiments, the extracted sentences are simplified for subsequent processing. Thus, for example, if the extracted sentences are non-simple sentences, they are converted into simple sentences based on clause structure.

The control logic 400 further includes the step of performing syntactic validation of each of the plurality of simplified sentences. In some embodiments, performing syntactic validation of a sentence comprises checking at least one of a grammatical correctness and a structural correctness of the sentence. Thus, in some embodiments, each of the simplified sentences is parsed for checking its grammatical correctness at step 403 and/or structural correctness at step 404. First, the sentences are parsed so as to identify and tag their corresponding parts of speech (PoS). Each of the sentences is then checked for grammatical correctness based on a set of pre-defined grammatical rules, and for structural correctness based on a set of pre-defined structural rules. For example, the sentence is to be in the form 'Subject: Predicate' or 'Subject: Predicate: Object'.

The control logic 400 further includes the step of determining if each of the plurality of simplified sentences is syntactically valid at step 405. In other words, the control logic determines if each of the plurality of simplified sentences satisfies a set of pre-defined grammatical rules and/or a set of pre-defined structural rules. If a sentence is not syntactically valid at step 405, the control logic 400 includes the step of providing for its correction and/or validation at step 406. It should be noted that the correction may be performed automatically or manually by the user. For example, in some embodiments, the control logic 400 may prompt the user to manually correct the sentence according to the grammatical rules and/or the structural rules at step 406. Alternatively, in some embodiments, the control logic 400 may automatically correct the sentence in accordance with the set of pre-defined grammatical rules and/or the set of pre-defined structural rules, and may then prompt the user to validate the correction performed at step 406.

The result of steps 402 - 406 is syntactically correct (i.e., grammatically and/or structurally correct) simple sentences with concept (i.e., noun tags) and feature (i.e., verb tags) marked. Thus, if the sentence is syntactically valid at step 405, the control logic 400 includes the step of extracting keywords and constructing a keywords table at step 407. Each of the syntactically valid simple sentences are parsed to identify and extract keywords. As noted above, in some embodiments, the keywords may include, but are not limited to, nouns, noun phrases, verbs, verb phrases, prepositions, and prepositional phrases. It should be noted that, in some embodiments, the nouns and noun phrases indicate concepts, verbs and verb phrases indicate properties, features, or actions associated with concepts, and prepositions and prepositional phrases indicate relationships among concepts. The extracted keywords are used to construct keywords table. As noted above, in some embodiments, the keywords table may be a noun term table comprising only nouns and noun phrases. In some embodiments, the keywords table comprises following fields: unique identification, sentence, and extracted keyword. As will be appreciated, a word may appear in multiple sentences and therefore a word may have multiple unique identifications in the keywords table. This may indicate that the word has been used in different contexts. By way of example, in some embodiments, a sample illustration of the keywords table is provided in Table A below:

**Table A**

| **Unique ID** | **Sentence(s)** | **Key Word** |
|---|---|---|
| 1 | Apartment Building has large open space. | Space |
| 2 | Carpet Area of house is one which is enclosed within walls. | Area |
| | Carpet area is measured in two dimension length and breadth. | |
| 3 | Apartment has many Sumps and carries huge volume of water. | Volume |
| 4 | It is biggest Apartment complex in the Region. | Region |
| 5 | India is pacing ahead in space technology. | Space |
| 6 | Space research involves exploration of outer atmosphere. | Outer Atmosphere |

The control logic 400 includes the step of constructing a keywords usage table based on the keywords table at step 408. The keywords usage table comprises a plurality of sets of keywords such that each set has keywords possessing the same or similar meaning from the keywords table. In other words, the keywords usage table is a collection of synonymous set of keywords. Additionally, as will be appreciated, in any language, there are a few words that express multiple meanings when used in different contexts. The exact meaning of such words may therefore be determined from the context of the sentence in which the word is used. The keywords usage table therefore has a feature or property set with each of the synonymous set of keywords. The context of same word listed in the keywords table may be resolved using the feature or property sets. Thus, in case a word with a different meaning in different contexts is encountered, the feature or property set is exploited for the identification of exact word. In other words, the keywords usage table enables identification of not only words possessing the same or similar meaning, but also words possessing different meanings in different contexts. The feature or property sets of words are typically obtained from sentence from where keywords (e.g., noun term) is extracted and is enriched using WordNet or other similar tools. It should be noted that, the same word with similar feature or property set are typically eliminated from the keywords usage table to avoid redundancy. Further, as noted above, in some embodiments, the keywords usage table may be a noun term usage table if the keywords table (from which it is derived) includes only nouns and noun phrases. As will be appreciated, the keyword usage table therefore provides a mechanism or a framework for finding semantically sensible concept of a multi-contextual word listed in the keywords table. In some embodiments, the keywords usage table comprises following fields: unique identification, synonymous set (synonymous words having same or similar meaning in same or similar context), and feature or property set (words expounding the contextual meaning of the corresponding synonymous set). By way of example, in some embodiments, a sample illustration of the keywords usage table is provided in Table B below:

**Table B**

| **Unique ID** | **Synonym Set** | **Feature/Property Set** |
|---|---|---|
| 1.1 | Space, Area, Volume, Region | One, two, or three dimensional; bounded, occupied by objects |
| 1.2 | Space, Outer Atmosphere | Related to solar system, beyond the earth's atmosphere, boundless |

The control logic 400 further includes the step of constructing a concept table based on the keywords usage table at step 409. As stated above, in some embodiments, the concept table is a statistically significant concept table based on a statistical analysis for each of the plurality of synonymous set of keywords with respect to the input document(s). For example, in some embodiments, a statistically indexed TF-IDF concept table is constructed by determining a frequency of occurrence of each synonymous set of keywords from the keywords usage table across the input documents. A frequency of occurrence of each keywords in a given synonymous set of keywords along with given feature or property set in all the input document(s) is computed. A cumulative frequency of occurrence of all keywords in the given synonymous set of keywords is then determined to be the frequency of occurrence of the given synonymous set of keywords across the input documents. If the frequency is more than a pre-defined threshold value, the synonymous set is accepted as a valid concept. It should be noted that the threshold value may a top 'x' percentile (say, 90 percentile) synonymous sets in the order of their corresponding frequencies, or a top 'x' (say, 10) synonymous sets in the order of their corresponding frequencies, or all synonymous sets having corresponding frequency above 'x' (say, 5). By way of example, in some embodiments, a sample illustration of the concept table is provided in Table C below:

**Table C**

| **Unique ID** | **Synonym Set** | **Feature/Property Set** | **Frequency** |
|---|---|---|---|
| 1.1 | Space, Area, Volume, Region | One, two, or three dimensional; bounded, occupied by objects | 9 |
| 1.2 | Space, Outer Atmosphere | Related to solar system, beyond the earth's atmosphere, boundless | 7 |
| 3 | TCP/IP, TCP and IP | Related to Internet communication protocol, transport layer protocols, packet routing and host addressing | 6 |
| 4 | Local Area Network, LAN, LAN operations | computer network that links devices within a building or group of adjacent buildings, Used to share resources such as a printer or network storage, Comprises cables, switches, routers and other components that let users connect to internal servers | 8 |

The control logic 400 further includes the step of constructing a concept attributes table (also referred to as a concept property and relationship table) for each of the concept in the concept table at step 410. As stated above, the attributes may include, but are not limited to, a property associated with a concept, a usage of a concept, a condition for a concept, a context associated with a concept, and a relationship among a plurality of concepts. Thus, the concept attributes table identifies varied concept properties such as verbs, restrictions, and features (e.g., dates, digits, units, formulae etc.). In some embodiments, a concept may be determined from the concept table. Each of the sentences associated with the concept may then be parsed so as to construct the concept attributes table. By way of an example, in some embodiments, a sample illustration of the concept table is provided in Table D below:

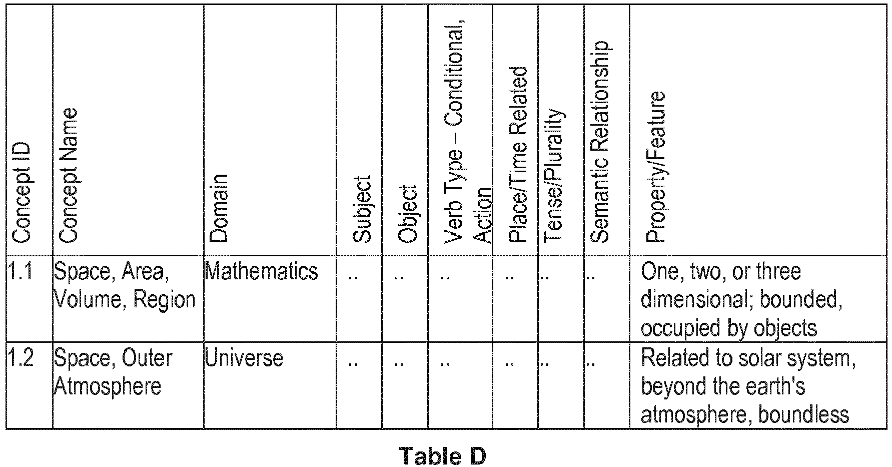

It should be noted that, from relationships among concepts, concepts that are in top level are defined as domain and added to concept attributes table. Additionally, all concepts and their linked concepts related to a specific domain are then added to concept attributes table along with their unique record identification. The noun/noun phrase and their respective row numbers retrieved from the statistically indexed TF-IDF concept table are also fed into the concept attributes table. Similarly, the verbs of the sentence define an action and is inserted into verb column of the concept attributes table. The conditional sentences elucidate a constraint on the action and is therefore inserted into the verb column of the concept attributes table. The quantifiers, multipliers etc. may also elucidate the restrictions on the nouns (i.e., concept) and are fed into the concept property/feature field corresponding to that concept. It should be noted that the restriction on concepts may be at least at two levels: individual concepts (within domain), and across concepts (domain level).

Further, it should be noted that the relationship may include, but is not limited to, a `kind-of' relationship, an association relationship, a composition relationship, an aggregation relationship, and a dependency relationship. Thus, for each concept example C1 in the concept list, if its hypernyms list contains another concept C2 which have hyponyms C1, then C1 is the 'kind of' C2. Further, if the concept is a verb (VB), then in a sentence having structure (C1 - VB - C2) where C1 and C2 are domains, (VB) is the association relationship. Additionally, if the concept is verb (VB) and satisfies association relationship, and the concept is equal to one of the following: 'consists of', 'contain', 'hold', 'include', 'divided to', 'has part', 'comprise', 'carry', 'involve', 'imply', 'embrace' and so forth, then the relationship for that concept is the composition relationship or the aggregation relationship. For example, in the sentence 'organization consists of employees', the relationship between 'organization' and 'employees' is composition relationship. Similarly, if the concept is verb (VB) and satisfies association relationship, and the concept is equal to one of the following: 'require', 'depends on', 'rely on', 'based on', 'uses', 'follows', and so forth , then the relationship for that concept is the dependency relationship. For example, in the sentence 'actuator uses sensors and schedulers to open the door', the relationships between 'actuator' and 'sensor') as well as between 'actuator' and 'scheduler' are dependency relationships.

Further, given a sentence in the form C1 + R1 + C2 + 'conjunction' (e.g., 'and') + C3 where C1, C2, C3 is a domain, and R1 is a relationship, the relationship R1 is determined to be between the domains (C1, C2) as well as between the domains (C1, C3). Similarly, given a sentence in the form C1 + R1 + C2 + 'negated conjunction' (e.g., 'and not') + C3 where C1, C2, C3 are domains, and R1 is a relationship, the relationship R1 is determined to be only between the domains (C1, C2) and not between the domains (C1, C3). In some embodiments, the attributes (e.g., properties, relationships, etc.) are written in a sentential form. For example, the relationships that have a subset-superset type structure such as 'is a', 'kind of', or 'type of' is followed by noun only or an adjective and a noun only, then it forms a subset relationship which is included in semantic relations of the concept. In some embodiments, the semantic relations in the ontology are identified from the concept attributes table with the help of verbs and the prepositions. As will be appreciated, the semantic relations may be employed for determination of relationship between concepts.

The control logic 400 further includes the step of dynamically constructing a domain or concept linked ontology based on the concept attributes table at step 411. It should be noted that one or more concept is identified as domain in the attributes table based on the concept relationships. Thus, querying for a specific domain in the concept attributes table provides all related concepts under that domain. The domain ontology is then created based on these related concepts and is therefore also referred to as concept linked ontology. Similarly, querying for a time dependent or action based property in the concept attributes table provides all concepts associated with it. This enables cross-linking multiple time dependent or action based properties across domains or concepts and to group them. Additionally, in some embodiments, the domain ontology schema is represented by the structure of a concept. Thus, for each concept identified from 'subject' of a sentence, a concept structure is created. In some embodiments, the concept structure mainly comprises following fields: concept identification, domain or concept name, features or properties, semantic relationship, and restrictions.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

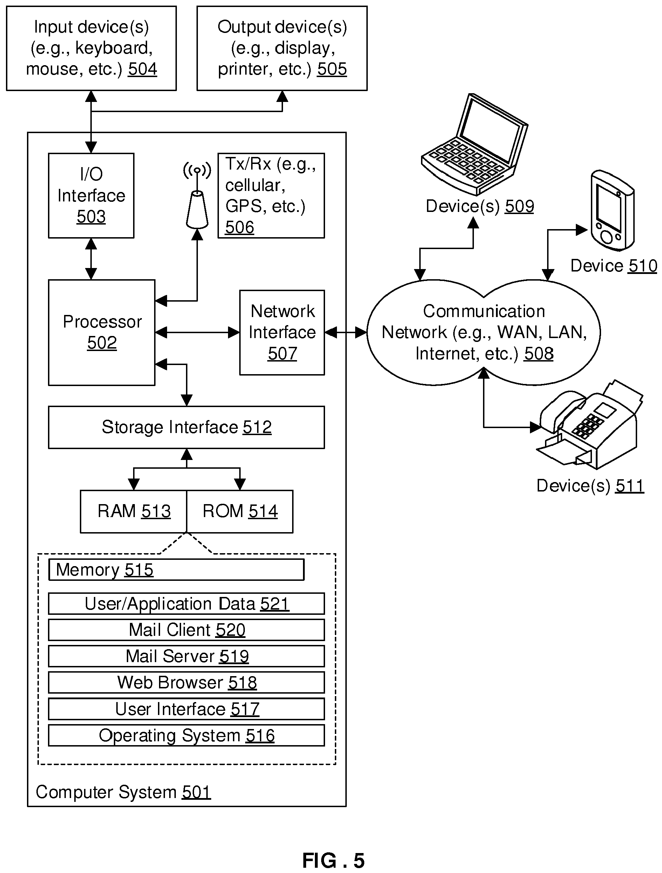

The disclosed methods and systems may be implemented on a conventional or a general-purpose computer system, such as a personal computer (PC) or server computer. Referring now to FIG. 5, a block diagram of an exemplary computer system 501 for implementing embodiments consistent with the present disclosure is illustrated. Variations of computer system 501 may be used for implementing system 100 for dynamically creating domain ontology. Computer system 501 may comprise a central processing unit ("CPU" or "processor") 502. Processor 502 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 502 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 502 may be disposed in communication with one or more input/output (I/O) devices via I/O interface 503. The I/O interface 503 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 503, the computer system 501 may communicate with one or more I/O devices. For example, the input device 504 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 505 may be a printer, fax machine, video display (e.g., cathode ray tube (CRT), liquid crystal display (LCD), light-emitting diode (LED), plasma, or the like), audio speaker, etc. In some embodiments, a transceiver 506 may be disposed in connection with the processor 502. The transceiver may facilitate various types of wireless transmission or reception. For example, the transceiver may include an antenna operatively connected to a transceiver chip (e.g., Texas Instruments WiLink WL1283, Broadcom BCM47501UB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 502 may be disposed in communication with a communication network 508 via a network interface 507. The network interface 507 may communicate with the communication network 508. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 508 may include, without limitation, a direct interconnection, local area network (LAN), wide area network (WAN), wireless network (e.g., using Wireless Application Protocol), the Internet, etc. Using the network interface 507 and the communication network 508, the computer system 501 may communicate with devices 509, 510, and 511. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 501 may itself embody one or more of these devices.

In some embodiments, the processor 502 may be disposed in communication with one or more memory devices (e.g., RAM 513, ROM 514, etc.) via a storage interface 512. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 516, user interface application 517, web browser 518, mail server 519, mail client 520, user/application data 521 (e.g., any data variables or data records discussed in this disclosure), etc. The operating system 516 may facilitate resource management and operation of the computer system 501. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 517 may facilitate display, execution, interaction, manipulation, or operation of program components through textual or graphical facilities. For example, user interfaces may provide computer interaction interface elements on a display system operatively connected to the computer system 501, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 501 may implement a web browser 518 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 501 may implement a mail server 519 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 501 may implement a mail client 520 stored program component. The mail client may be a mail viewing application, such as Apple Mail, Microsoft Entourage, Microsoft Outlook, Mozilla Thunderbird, etc.

In some embodiments, computer system 501 may store user/application data 521, such as the data, variables, records, etc. (e.g., input documents, grammatical rules, structural rules, extracted keywords, keywords table, keywords usage table, concept table, concept attributes table, domain ontology, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide for dynamic and automatic creation and building of domain ontology. The techniques provide for a mechanism and pre-defined concept structure to identify unique concepts in the input documents and to build the relationships among these concepts so as to automatically create and build the domain ontology without any set of pre-defined input of concepts. The ontology of common structure for various concepts across various domains within a set of input documents is dynamically created by extracting the contextual usage of keywords, contextual properties or features, and contextual thresholds. As described in the embodiments discussed above, this is achieved by analyzing each sentence after appropriate simplification using structural and semantic parser to discover unique concepts embedded in the sentence, by extracting keywords and finding their usage, properties, features, relationships and threshold values based on their contexts of usage, and by determining the cross linkage between the concepts and domains by extracting dependency factors on concept constraints, concept measurement parameters(units), time of action and action itself from the common structure. As will be appreciated, the techniques described in the embodiments discussed above is almost unsupervised and does not require any domain experts.

In other words, the techniques provide for creation of a common ontology structure by discovering key concepts, their properties, and their relationships using a pre-defined concept structure and concept linking methods from the set of input documents. The techniques extract concept constraint, concept measurement parameter, and time and action dependency information across domains or concepts, and thus enables identification of cross concept or domain linkages to build ontologies. This is carried out without any a-priori input on domain, ontology or previously known concepts, unlike the existing ontology creation and building techniques. Further, with the addition of new and more documents, the ontology evolves by discovering new concepts and their relationships. In some embodiments, the techniques provide for dynamic identification of domain and concept for unknown words on the fly using extracted keywords, their usage, and their attributes.

It should be noted that, in some embodiments, the techniques employ text mining (especially mining the domain specific texts and glossaries/dictionaries) and linguistic processing techniques in order to find groups of concepts/terms which are related to each other. Such groups of related concepts/terms may then enable the techniques to either, evaluate and update the existing ontology in case those concepts are already defined in the ontology, or to enrich the existing ontology in case those concepts are not defined. For example, the techniques employ pattern matching to learn new relationships between concepts in an ontology, while focuses on verb patterns to enrich the existing ontology. Additionally, the techniques described above are language independent and may therefore be easily applied to create and build domain dictionaries in different languages.

As will be appreciated by those skilled in the art, the domain ontology may be useful in multiple solutions such as document classification, machine translation, and other natural language processing (NLP) tasks. Further, the domain ontology may be effectively used for various purposes such as topic specific frequently asked questions (FAQs), information retrieval or searching, finding areas of interest, and so forth. Moreover, the domain ontology enables natural classification of words as it contains domain information.

The specification has described system and method for dynamically and automatically creating domain ontology. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method for automatically processing a natural language document to dynamically create a domain ontology, the method comprising:
extracting a plurality of keywords from each of a plurality of syntactically valid sentences in an input document;
determining a plurality of concepts from the plurality of keywords;
determining a plurality of attributes for each of the plurality of concepts, wherein each of the plurality of attributes comprises at least one of a property associated with a concept, a usage of a concept, a condition for a concept, a context associated with a concept, and a relationship among a plurality of concepts; and
dynamically creating a domain ontology for at least one of the plurality of concepts based on the corresponding plurality of attributes.

2. The method of claim 1, wherein the plurality of syntactically valid sentences is derived by:
parsing the input document to extract a plurality of sentences;
validating each of the plurality of sentences based on a set of pre-defined rules for at least one of a grammatical correctness and a structural correctness; and
subjecting each of the plurality of sentences to a manual correction based on validation.

3. The method of claim 1 or claim 2, wherein each of the plurality of keywords comprises at least one of a noun, a noun phrase, a verb, a verb phrase, a preposition, and a prepositional phrase.

4. The method of any of the preceding claims, wherein the plurality of concepts is determined by:
identifying a plurality of synonymous set of keywords from the plurality of keywords;
performing a statistical analysis for each of the plurality of synonymous set of keywords with respect to the input document; and
identifying the plurality of concepts based on the statistical analysis.

5. The method of claim 4, wherein the statistical analysis comprises determining a frequency of occurrence of each of the plurality of synonymous set of keywords across the input document, and wherein the plurality of concepts is identified based on a pre-defined threshold for the frequency of occurrence.

6. The method of claim 4 or claim 5, further comprising determining one or more features for each of the plurality of synonymous set of keywords, wherein the one or more features indicate a context of each of the plurality of synonymous set of keywords.

7. The method of any of the preceding claims, further comprising identifying, based on the relationship among at least some of the plurality of concepts, the at least one of the plurality of concepts as a domain.

8. The method of any of the preceding claims, wherein dynamically creating the domain ontology comprises creating a concept structure for the at least one of the plurality of concepts based on the corresponding plurality of attributes.

9. A system for automatically processing a natural language document to dynamically create a domain ontology, the system comprising:
at least one processor; and
a memory for storing instructions that, when executed by the at least one processor, cause the at least one processor to perform the method of any of the preceding claims.

10. A computer-readable medium storing instructions, wherein upon execution of the instructions by one or more processors, the processors perform the method of any of claims 1 to 8.
